# EUROPEAN PATENT APPLICATION

(11) **EP 1 092 500 A1**
(43) Date of publication of application: **18.04.2001**
(21) Application number: 00203519.4
(22) Date of filing: 11.10.2000
(51) Int. Cl.: B23Q 5/56, F16H 55/18

(54) **Rotary motion transmission system without backlash and machine tool head using said transmission system**

(30) Priority: 14.10.1999 IT MI992153
(71) Applicant: F.M. Elettromeccanica s.r.l., 20036 Meda (IT)
(72) Inventor: Marelli, Flavio, 20036 Meda (MI) (IT)
(74) Representative: Mittler, Enrico

(57) **Abstract**

The present invention describes a rotary motion transmission system between two axes, in particular between two parallel axes and more in particular a transmission system without coupling backlash.

It refers also to the head of a machine tool using said transmission system.

In one embodiment the invention is made up of a rotary motion transmission system (10) by means of gear wheel between a first driving shaft (11) and a second driven shaft (12) characterised in that it comprises a first (16) and a second (17) oblique gear concentric to said driving shaft (11), a third (14) and a fourth (15) oblique gear concentric to said driven shaft (12), said first (16), second (17) and third (14) gear are integral with the respective shafts (11, 12), said first (16) and second (17) gear engage respectively said third (14) and fourth (15) gear, said fourth gear (15) is constrained for the rotation to said third gear (14) and is mounted on said driven shaft (12) so that it can slide axially along it against the action of an elastic force, so that the teeth of said fourth gear (15) are forced against the teeth of said second gear (17) to annul the backlash between said fourth (15) and said second (17) gear and consequently between said first (16) and third (14) gear.

## Description

The present invention refers to a rotary motion transmission system between two axes, in particular between two parallel axes and more in particular a transmission system without coupling backlash.

It also describes the head of a machine tool using said transmission system.

In the members of motion transmission by means of gear wheels there can be coupling backlash, whether it be intrinsic, that is due to working precision foreseen (tolerances), characteristic of the construction of the transmission members, or it is formed or increased during operation as a consequence of wear of the coupling surfaces.

Said backlash can be noted particularly when changes in direction or in speed of the coupling gears are contemplated.

In view of the state of the technique described, the object of the present invention is to provide a rotary motion transmission system between two axes, without coupling backlash.

In accordance with the present invention, said object is reached by means of a rotary motion transmission system through gear wheels between a first driving shaft and a second driven shaft characterised in that it comprises a first and a second oblique gear concentric to said driving shaft, a third and a fourth oblique gear concentric to said driven shaft, said first, second and third gears are integral with the respective shafts, said first and second gears engage said third and fourth gears respectively, said fourth gear is constrained for the rotation to said third gear and is mounted on said driven shaft so as to be able to slide axially along it against the action of an elastic force, so that the teeth of said fourth gear are forced against the teeth of said second gear to annul the backlash between said fourth and said second gear and consequently between said first and third gears.

Said object is also reached by means of a head suitable to be connected to a machine tool characterised in that it comprises a rotary motion transmission system by means of gear wheels between a first driving shaft and a second driven shaft in accordance with the present invention.

The characteristics and the advantages of the present invention appear evident from the following detailed description of an embodiment thereof, illustrated as non-limiting example in the enclosed drawings, in which:
Figure 1 represents an embodiment of the rotary motion transmission system in accordance with the present invention,
Figure 2 represents the rotary motion transmission system 10 of Figure 1 seen from the side,
Figure 3 represents an embodiment of the head of a machine tool in accordance with the present invention.

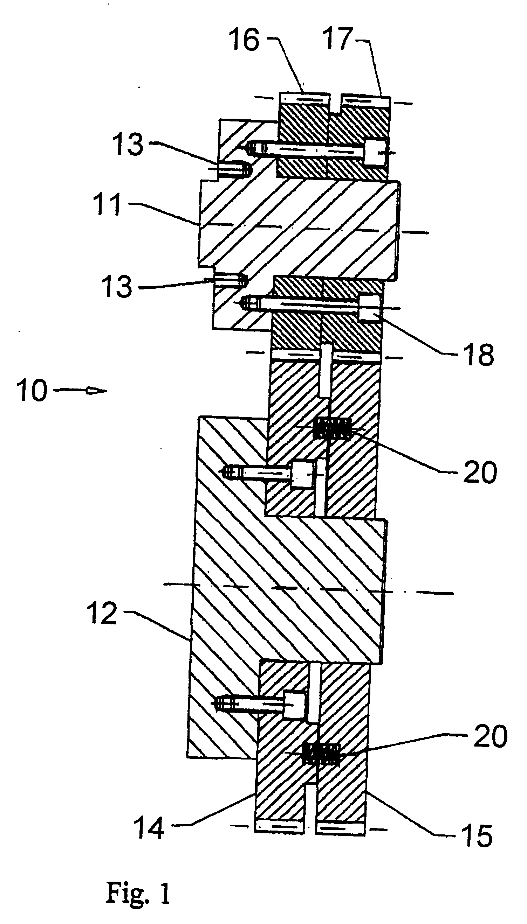

Now referring to Figure 1, showing the representation of an embodiment of the rotary motion transmission system 10, in accordance with the present invention, a driving transmission shaft 11 and a driven transmission shaft 12 can be seen.

The driving transmission shaft 11 is connected, by means of special connection means 13 to a motor (not shown).

There is a first gear 16 and a second gear 17 on the driving transmission shaft 11, solidly constrained between one another and the shaft by means of appropriate screws 18. There is a third gear 14 and a fourth gear 15 on the driven transmission shaft 12.

The third gear 14 is firmly constrained, by means of appropriate screws, to the driven transmission shaft 12; the fourth gear 15 is instead free to move axially along the axis of the driven transmission shaft 12. The fourth gear 15, even though free to move along the axis, remains in contact with the third gear 14 through a special claw clutch or a plug clutch placed on the contact surfaces between the third 14 and the fourth 15 gear.

The fourth gear 15, free to move along the axis of the driven transmission shaft 12, is preloaded so that it shifts as much as possible from the third gear 14. The preload is preferably supplied by means of elastic elements (springs) 20 that exercise their force between the third 14 and the fourth 15 gear. In this manner the fourth gear 15 is moved away from the third gear 14.

The separation of the third 14 and the fourth 15 gear, ensures that the slanting teeth of the fourth gear 15 are forced against the slanting teeth of the second gear 17, so that the teeth of the fourth 15 and of the second 17 gear are in close contact with each other, thus eliminating the coupling backlash between these two gears.

The first 16 and the second 17 gear are firmly constrained to the driving transmission shaft 11, and therefore to each other, the third 14 and the fourth 15 gear are engaged to each other. Having eliminated the backlash between the fourth 15 and the second 17 gear, and on the basis of the connection between the other gears as has just been described, a regime is created in which coupling backlash between the driving transmission shaft 11 and the driven transmission shaft 12 is eliminated.

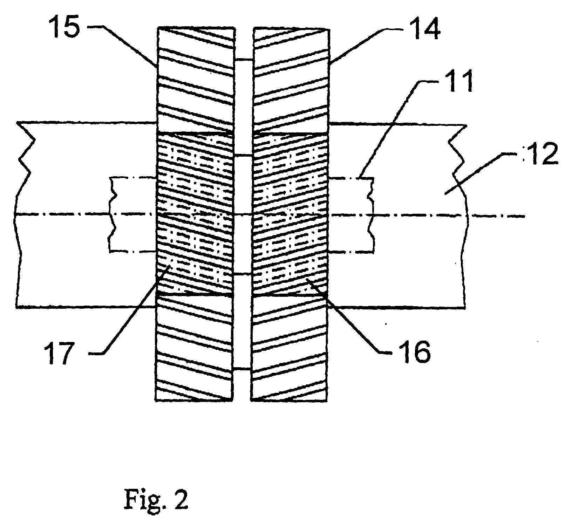

Figure 2 represents the rotary motion transmission system 10 in Figure 1 seen from the side, in which the driving shaft 11 and the relative gears 16 and 17 are represented with a dotted line, while the driven shaft 12 and the relative gears 14 and 15 are represented with a continuous line. It can be noted how the inclination of the teeth of the third 14 and of the fourth 15 gear, having angles equal to and opposite each other, weds respectively with that of the first 16 and of the second 17 gear, having angles equal and opposite each other.

One possible application of a rotary motion transmission system 10 between two axes, in accordance with the present invention, can be that in which it is used for the transmission of motion between two elements of a tilting head of a machine tool.

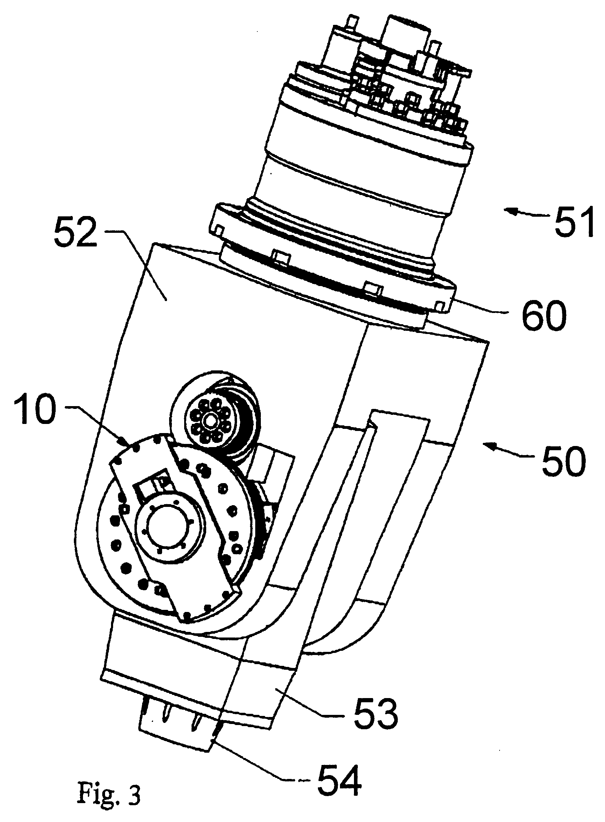

According to a preferred embodiment, a two-axis tilting head 50 is represented in Figure 3.

The tilting head 50 comprises a first fifth wheel 60, that advantageously comprises both a crossed roller bearing and a brake system, so that the head 50 can be connected to a machine tool (not shown) for example with 3 axes. A body 51, connected to the fifth wheel 60 (machine side), is set-up for the electric, hydraulic and pneumatic connections between the head 50 and the machine tool. A U-shaped support 52 is connected to the fifth wheel 60 (head side). The support 52 is thus free to rotate around a first axis corresponding to the axis of the fifth wheel 60.

A cradle 53, with a shape suitable for incorporating and holding an electro-spindle 54, is pivoted at the ends of the U of the support 52, along a second axis perpendicular to the axis of the fifth wheel 60 (first axis).

The cradle 53 is driven by a motor and eventual reduction gear, a rotary motion transmission system 10, according to the present invention, a second fifth wheel, made the same as the first fifth wheel, for interconnection between the cradle 53 and the above mentioned motion members.

## Claims

1. Rotary motion transmission system (10) by means of gear wheels between a first driving shaft (11) and a second driven shaft (12) characterised in that it comprises a first (16) and a second (17) oblique gear concentric to said driving shaft (11), a third (14) and a fourth (15) oblique gear concentric to said driven shaft (12), said first (16), second (17) and third (14) gear are integral with the respective shafts (11, 12), said first (16) and second (17) gear engage respectively said third (14) and fourth (15) gear, said fourth gear (15) is constrained for the rotation to said third gear (14) and is mounted on said driven shaft (12) so that it can slide axially along it against the action of an elastic force, so that, the teeth of said fourth gear (15) are forced against the teeth of said second gear (17) to annul the backlash between said fourth (15) and said second (17) gear and consequently between said first (16) and third (14) gear.

2. Transmission system (10) in accordance with claim 1 characterised in that said fourth gear (15) is constrained to said third gear (14) by means of a claw clutch.

3. Transmission system (10) in accordance with claim 1 characterised in that said fourth gear (15) is constrained to said third gear (14) by means of a pins coupling.

4. Transmission system (10) in accordance with claim 1 characterised in that said first shaft (11) and said second shaft (12) are parallel.

5. Transmission system (10) in accordance with claim 1 characterised in that said fourth gear (15) by means of an elastic element (20).

6. Transmission system (10) in accordance with claim 5 characterised in that said elastic element (20) is constrained on one side to said fourth gear (15) and on the other side to said third gear (14).

7. Head (50) suitable for being connected to a machine tool characterised in that it comprises a rotary motion transmission system (10) by means of gear wheels between one first driving shaft (11) and a second driven shaft (12) in accordance with one of any of the previous claims.
